# EUROPÄISCHE PATENTSCHRIFT

(11) **EP 1 527 372 B1**
(45) Veröffentlichungstag und Bekanntmachung des Hinweises auf die Patenterteilung: **04.07.2007**
(21) Anmeldenummer: 03761418.7
(22) Anmeldetag: 11.06.2003
(51) Int. Cl.: G03B 1/22, G03B 1/00

(54) **FILMSCHALTWERK IN EINER LAUFBILD-FILMAUFNAHMEKAMERA**
FILM FEED MECHANISM IN A MOTION-PICTURE CAMERA
MECANISME D'AVANCEMENT DE FILM D'UNE CAMERA CINEMATOGRAPHIQUE

(30) Priorität: 26.06.2002 DE 10229380
(43) Veröffentlichungstag der Anmeldung: 04.05.2005
(73) Patentinhaber: ARNOLD & RICHTER CINE TECHNIK GMBH & CO. BETRIEBS KG, 80701 München (DE)
(72) Erfinder: TRAUNINGER, Walter, A-2381 Laab im Walde (AT)
(74) Vertreter: Ninnemann, Detlef
(86) Internationale Anmeldenummer: PCT/DE2003/001987
(87) Internationale Veröffentlichungsnummer: WO 2004/003657

(56) Entgegenhaltungen:
- US-A- 3 524 573
- US-A- 3 774 828
- US-A- 3 791 566
- US-A- 4 003 647

## Beschreibung

Die Erfindung bezieht sich auf ein Filmschaltwerk in einer Laufbild-Filmaufnahmekamera gemäß dem Oberbegriff des Anspruchs 1.

Aus der DE 38 35 829 C1 ist ein Filmschaltwerk in einer Laufbild-Filmaufnahmekamera bekannt, das einen Transportgreifer und ein Transportgetriebe umfaßt. Der Transportgreifer besteht aus einer Transportgreiferlasche, an deren einem Ende mindestens eine Transportgreiferspitze ausgebildet ist, die den zu transportierenden, mit einem Perforationsrand versehenen Laufbildfilm schrittweise an einem Belichtungsfenster vorbei bewegt. Ein Mittenabschnitt der Transportgreiferlasche ist über ein Greifergelenk mit einer Kurbel verbunden, in deren Drehachse eine Antriebswelle angeordnet ist, die mit einem Filmtransportmotor gekoppelt ist. Das der Transportgreiferspitze entgegengesetzte Ende der Transportgreiferlasche ist mit einer um eine Schwingenachse schwenkbaren Schwinge verbunden, an die ausserdem ein Sperrgreifer angelenkt ist, der nach Beendigung eines Filmtransportschrittes infolge einer gegenläufigen Bewegung des Sperrgreifers und des Transportgreifers in ein Perforationsloch der Filmperforation eintaucht und den Bildstand des Laufbildfilms während der Belichtung eines Filmbildes sichert.

Das aus der Kurbel und der Schwinge gebildete Transportgetriebe bewegt den Transportgreifer so, daß die Transportgreiferspitze eine längliche, in sich geschlossene Kurve durchläuft, die an ihrem einen Ende in die Filmlauffläche eintritt und sie am anderen Ende wieder verläßt, so daß der Abstand der beiden Umkehrpunkte die Hublänge des Transportgreifers und damit einen Filmtransportschritt bestimmt.

Zur Anpassung der Bahnkurve der Transportgreiferspitzen und der Eintauchtiefe des Sperrgreifers ist bei dem bekannten Filmschaltwerk die Schwingenachse der die gegenläufige Bewegung des Sperrgreifers und des Transportgreifers bestimmenden Schwinge und die wirksame Länge der Schwinge und der Kurbel veränderbar.

Damit der Laufbildfilm immer an der richtigen Stelle zur Belichtung eines Filmbildes positioniert wird, muß der Transportgreifer den Laufbildfilm stets exakt um die Hublänge transportieren, d. h. der Abstand zwischen den Umkehrpunkten der durch die Transportgreiferspitzen beschriebenen Bahnkurve muß konstant sein. Bei sich ändernder Hublänge der Transportgreiferspitzen, d. h. bei unterschiedlich langen Filmtransportschritten, verändert sich nicht nur der Abstand der belichteten Filmbilder zueinander, sondern die in ein entsprechendes Perforationsloch des Laufbildfilmes eintauchende Spitze des Sperrgreifers fluchtet nicht mehr exakt mit dem betreffenden Perforationsloch, sondern trifft auf eine Perforationskante und beschädigt dabei den Laufbildfilm.

Da an den Umkehrpunkten der Bahnkurve der Transportgreiferspitze erhebliche Massenkräfte auf die Transportgreiferspitze einwirken, biegt sich diese an den Umkehrpunkten nach außen im Sinne einer Verlängerung der Bahnkurve, d. h. beim oberen Umkehrpunkt nach oben und beim unteren Umkehrpunkt nach unten. Diese Verformung der Transportgreiferspitze hat eine Verlängerung der Hublänge zur Folge, so daß der Abstand der zu belichtenden Filmbilder verändert wird und die Filmperforation durch einen nicht exakt in ein Perforationsloch eintauchenden Sperrgreifer beschädigt wird.

Da die Verformung der Transportgreiferspitzen mit steigender Filmtransportgeschwindigkeit zunimmt, steigt die Hublänge mit steigender Filmtransportgeschwindigkeit an, so daß aufgrund der fehlerhaften Positionierung des Laufbildfilmes die Position des Sperrgreifers immer mehr von dem Ort des zugeordneten Perforationsloches abweicht und daraus immer größere Filmbeschädigungen resultieren.

Aufgabe der vorliegenden Erfindung ist es, ein Filmschaltwerk der eingangs genannten Art zu schaffen, das über den gesamten Bildfrequenzbereich eine gleichbleibend korrekte Hublänge bei einem Filmtransportschritt des Transportgreifers sicherstellt.

Diese Aufgabe wird erfindungsgemäß durch die Merkmale des Anspruchs 1 gelöst.

Die erfindungsgemäße Lösung gewährleistet eine gleichbleibend korrekte Hublänge des Transportgreifers über den gesamten Bildfrequenzbereich und damit einen exakten gegenseitigen Abstand der belichteten bzw. zu belichtenden Filmbilder, der Laufbild-Filmaufnahmekamera. Durch die exakte Positionierung des Laufbildfilmes wird sichergestellt, daß bei einem Filmschaltwerk mit einem Sperrgreifer die Sperrgreiferspitze bei allen Filmtransportgeschwindigkeiten exakt in ein Perforationsloch eintaucht, so daß eine Beschädigung des Laufbildfilmes vermieden wird.

Der erfindungsgemäßen Lösung liegt die Überlegung zugrunde, die unvermeidliche Deformation der Transportgreiferspitzen aufgrund der auf sie einwirkenden Massenkräfte in Abhängigkeit von der Filmtransportgeschwindigkeit zu kompensieren und damit die vorgegebene, exakte Hublänge herzustellen und einzuhalten.

Die Kinematik des Transportgreifers kann dynamisch mit sich ändernder Filmtransportgeschwindigkeit oder statisch bei der Einstellung der Filmtransportgeschwindigkeit verändert werden. In einer weiteren Variante kann die Kinematik des Transpoilgreifers statisch mit der Vorgabe der gewünschten Filmtransportgeschwindigkeit voreingestellt und mit einer dynamischen Regelung beim Filmtransport und sich ändernder Filmtransportgeschwindigkeit kombiniert werden.

Eine vorteilhafte Ausgestaltung der erfindungsgemäßen Lösung ist dadurch gekennzeichnet, daß mit steigender Filmtransportgeschwindigkeit die Umkehrpunkte der Transportgreiferlasche zueinander bewegt werden. Durch eine Veränderung der Lage der Transportgreiferlasche kann mit einfachen Mitteln der obere und untere Umkehrpunkt der Transportgreiferspitze unter Berücksichtigung der an den Umkehrpunkten auftretenden Massenkräfte beeinflußt und damit eine korrekte Hublänge des Transportgreifers sichergestellt werden.

Vorzugsweise wird die Kinematik des Transportgreifers durch eine Änderung der relativen Lage zwischen dem Transportgreifer und einem gelenkig mit dem Transportgreifer verbundenen Greiferantrieb verändert.

Alternativ oder kombiniert mit der vorstehenden Veränderung der Kinematik kann die Kinematik des Transportgreifers durch eine Verlagerung der Anlenkung des der Transportgreiferspitze entgegengesetzte Endes der Transportgreiferlasche an einem Steuerelement verändert werden, das die Eintauchbewegung des Transportgreifers und eines nach der Beendigung eines Filmtransportschrittes in die Filmperforation eintauchenden Sperrgreifers derart steuert, dass der Sperrgreifer den Laufbildfilm mit dem erneuten Eintauchen des Transportgreifers in die Filmperforation wieder freigibt.

Insbesondere kann die Anlenkung des Transportgreifers am Steuerelement mit zunehmender Filmtransportgeschwindigkeit zur Achse des Steuerelements hin verlagert werden.

Eine Veränderung der Kinematik des Transportgreifers durch einen Eingriff in die Kinematik durch Verstellen geeigneter Punkte der Kinematik kann sowohl auf elektrischem als auch auf mechanischem Wege erfolgen.

Eine elektrische Verstellung der Kinematik des Transportgreifers wird durch Veränderung eines von einer Kamerasteuerung an ein elektrisch betätigtes Stellglied abgegebenen Stellsignals bewirkt, wobei das Stellglied aus einem mit der Transportgreiferlasche oder der Anlenkung am Steuerelement mittelbar oder unmittelbar verbundenen Stellmotor bestehen kann. Zur Veränderung der Kinematik des Transportgreifers kann die Kamerasteuerung das Stellsignal in Abhängigkeit von der Filmtransportgeschwindigkeit kontinuierlich oder diskontinuierlich verändern.

Eine mechanische Verstellung der Kinematik des Transportgreifers kann mittels eines mit dem Greiferantrieb oder mit dem Transportgreifer verbundenen mechanischen Stellgliedes erfolgen, das vorzugsweise aus einem Fliehkraftregler besteht.

Eine Alternative hierzu besteht darin, daß mit dem Einstellen einer Filmtransportgeschwindigkeit eine Verschiebung der Lage des Greiferantriebs in Bezug auf den Transportgreifer oder eine Änderung der Verbindung zwischen dem Greiferantrieb und dem Transportgreifer erfolgt.

Anhand eines in der Zeichnung dargestellten Ausführungsbeispieles soll der der Erfindung zugrundeliegende Gedanke näher erläutert werden. Es zeigen:
- Fig. 1: eine schematische Darstellung eines Filmschaltwerkes mit der Bahnkurve eines Transportgreifers;
- Fig. 2: eine schematische Darstellung einer Veränderung der Kinematik des Transportgreifers bei unterschiedlichen Transportgeschwindigkeiten durch eine Verlagerung der Antriebsachse eines Kurbelantriebs;
- Fig. 3: eine schematische Darstellung einer Veränderung der Kinematik des Transportgreifers bei unterschiedlichen Transportgeschwindigkeiten durch eine Verlagerung der Anlenkung der Transportgreiferlasche an einem Steuerelement und
- Fig.4: eine schematische Darstellung einer elektrischen Veränderung der Kinematik des Transportgreifers mittels eines Stellmotors und eines von der Kamerasteuerung abgegebenen, geschwindigkeitsabhängigen Stellsignals..

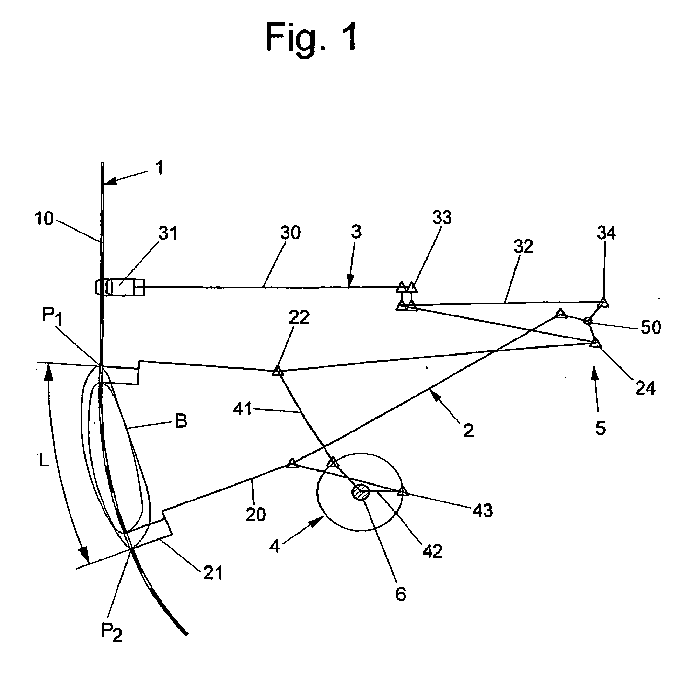

Das in Fig. 1 schematisch dargestellte Filmschaltwerk dient zum Transport eines Laufbildfilmes 1, dessen Rand bzw. dessen Ränder mit einer Perforation 10 versehen ist bzw. sind. Das Filmschaltwerk weist mindestens einen Transportgreifer 2 und mindestens einen Sperrgreifer 3 auf, d.h. entweder einen in eine einseitige Perforation eingreifenden Transport- und Sperrgreifer 2, 3 oder zwei in beidseitige Perforationen eingreifende Transport- und Sperrgreifer 2, 3. Weiterhin enthält das Filmschaltwerk einen Filmantrieb mit einer Antriebswelle 6, die mit einem nicht näher dargestellten Filmtransportmotor verbunden ist, eine Kurbel 4 und ein Steuerelement 5. Der bzw. die Transportgreifer 2 und Sperrgreifer 3 sind als Tauchgreifer ausgebildet und weisen an ihren dem Laufbildfilm 1 zugewandten Enden eine oder mehrere Transportgreiferspitzen 21 bzw. eine Sperrgreiferspitze 31 auf, die abwechselnd in die Perforationslöcher 10 des Laufbildfilms 1 eintauchen.

Der mindestens eine Transportgreifer 2 weist eine Transportgreiferlasche 20 auf, an deren einem Ende die Transportgreiferspitze 21 angeordnet ist und deren anderes Ende mit einer Anlenkung 24 an einem Steuerelement 5 verbunden ist, das um eine Steuerelementachse 50 schwingt oder um die Steuerelementachse 50 rotiert. Ein Mittenabschnitt der Transportgreiferlasche 20 ist über ein Greifergelenk 22 mit einem ersten Kurbelarm 41 der Kurbel 4 und dieser über ein Kurbelgelenk 43 mit einem zweiten Kurbelarm 42 verbunden, der an die Antriebswelle 6 angelenkt ist.

Der mindestens eine Sperrgreifer 3 besteht aus einem Sperrgreiferstift 30, an dessen einem Ende die Sperrgreiferspitze 31 angeordnet ist und dessen anderes Ende über eine Sperrgreiferlasche 33 mit einem Sperrgreiferhebel 32 verbunden ist, der über eine Anlenkung 34 am Steuerelement 5 angelenkt ist.

Die Bewegung des Transportgreifers 2 bei einem Filmtransportschritt setzt sich entsprechend der vorstehend beschriebenen Kinematik des Transportgreifers 2 aus einer horizontalen und einer vertikalen Bewegung zusammen, so daß die Transportgreiferspitze 21 die in Fig. 1 schematisch dargestellte Bahnkurve B beim Transport des Laufbildfilms 1 beschreibt. Durch die Verbindung der Transportgreiferlasche 20 und des Sperrgreiferhebels 32 mit unterschiedlichen Anlenkpunkten 24, 34 des Steuerelements 5 wird eine gegenläufige horizontale Bewegung der Transportgreiferspitze 21 und der Sperrgreiferspitze 31 bewirkt, so daß sich während eines Filmtransportschrittes, bei dem der Laufbildfilm 1 um ein Filmbild weiterbewegt wird, die Sperrgreiferspitze 31 außerhalb der Filmebene befindet, während die Transportgreiferspitze 21 in die Filmperforation 10 eingetaucht ist und den Laufbildfilm 1 entsprechend der vorgegebenen Hublänge L zwischen einem oberen Umkehrpunkt P1 und einem unteren Umkehrpunkt P2 bewegt.

Nach Beendigung eines Filmtransportschrittes verläßt die Transportgreiferspitze 21 die Filmperforation 10 und die Sperrgreiferspitze 31 taucht in ein mit der Sperrgreiferspitze 31 fluchtendes Perforationsloch 10 ein und gewährleistet einen festen Bildstand des Laufbildfilms 1, von dem der zu belichtende Teil vor einem Bildfenster positioniert ist, das während der Belichtung des Laufbildfilms 1 durch eine vor dem Bildfenster angeordnete Blende freigegeben wird.

Fig. 1 zeigt den Transportgreifer 2 in den beiden Endstellungen, wenn sich die Transportgreiferspitze 21 in den Umkehrpunkten P1 und P2 befindet und den Sperrgreifer 3 beim Eintauchen der Sperrgreiferspitze 31 in die Filmperforation 10 bzw. nach dem Verlassen der Filmebene.

Voraussetzung für einen korrekten Bildstand, d. h. einen konstanten Abstand zweier aufeinanderfolgender, zu belichtender Filmbilder ist eine exakte Einhaltung der Hublänge L des Transportgreifers 2 zwischen dem oberen Umkehrpunkt P1 und dem unteren Umkehrpunkt P2 der Bahnkurve B. Ist das Filmschaltwerk wie das in Fig. 1 dargestellte Filmschaltwerk mit einem Sperrgreifer 3 versehen, der nicht notwendigerweise vorgesehen werden muß, so ist das Einhalten der exakten Hublänge L gleichermaßen auch für eine schonende Behandlung des Laufbildfilmes 1 erforderlich, damit die Sperrgreiferspitze 31 in ein mit ihr fluchtendes Perforationsloch 10 eintaucht und nicht infolge einer fehlerhaften Positionierung des Laufbildfilms 1 auf die Kante eines Perforationslochs 10 oder sogar auf einen Filmsteg zwischen zwei Perforationslöchern 10 trifft. Eine fehlerhafte Positionierung des Laufbildfilmes 1 durch den Transportgreifer 2 würde somit zu erheblichen Beschädigungen des Laufbildfilmes 1 führen.

Maßgebend für das Einhalten der exakten Hublänge L ist die exakte geometrische Positionierung der Transportgreiferspitze 21 am oberen und unteren Umkehrpunkt P1, P2.

Aufgrund von Massenkräften tritt aber eine von der Filmtransportgeschwindigkeit abhängige Deformation der Transportgreiferspitze 21 an den Umkehrpunkten P1 und P2 auf, die dazu führt, daß die Transportgreiferspitze 21 am oberen Umkehrpunkt P1 nach oben und am unteren Umkehrpunkt P2 nach unten gebogen wird. Diese Verformung der Transportgreiferspitze 21 aufgrund von Massenkräften hat eine Verlängerung der Hublänge L mit wachsender Filmtransportgeschwindigkeit zur Folge.

Um sicherzustellen, daß insbesondere auch bei höheren Filmtransportgeschwindigkeiten die korrekte Hublänge L der Transportgreiferspitze 21 eingehalten wird, wird nach dem Gegenstand der vorliegenden Erfindung in Abhängigkeit von der Filmtransportgeschwindigkeit in die Kinematik des Transportgreifers 2 so eingegriffen, daß die Transportgreiferspitze 21 unter Berücksichtigung der auftretenden Massenkräfte den oberen und unteren Umkehrpunkt P1 bzw. P2 exakt einhält.

Eine Änderung der Kinematik des Transportgreifers 2 kann grundsätzlich auf verschiedene Weise erfolgen. Wesentlich ist, daß die vertikale Bewegungskomponente der Transportgreiferlasche 20 mit steigender Filmtransportgeschwindigkeit verringert wird, so daß unter Berücksichtigung der an der Transportgreiferspitze 21 angreifenden Massenkräfte und der daraus resultierenden Deformation der Transportgreiferspitze 21 die Position des oberen und unteren Umkehrpunktes P1, P2, der Transportgreiferspitze 21 eingehalten wird.

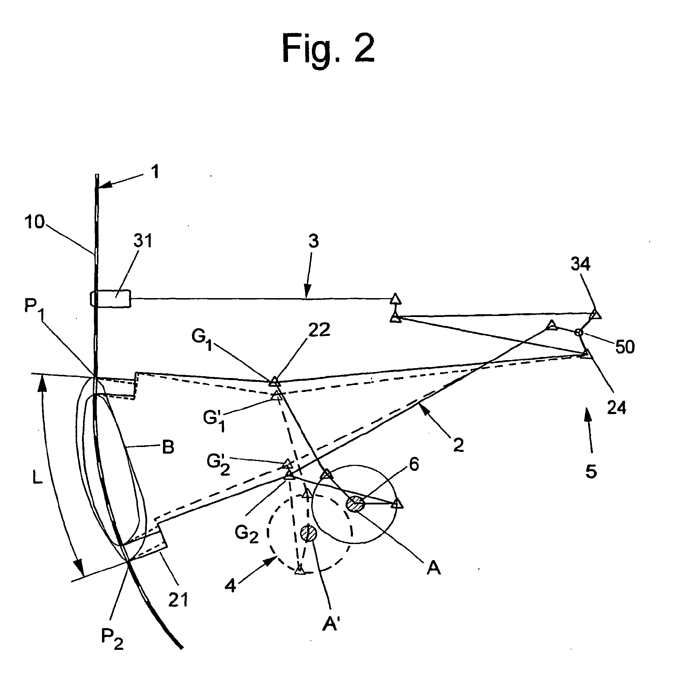

Fig. 2 zeigt eine erste Möglichkeit, die durch die Deformation der Transportgreiferspitze 21 hervorgerufene Verlängerung der Hublänge L zu kompensieren, d. h. einer durch die Deformation der Transportgreiferspitze 21 hervorgerufenen Änderung eines Filmtransportschrittes entgegenzuwirken.

Durch eine Verlagerung der Antriebswelle 6 von der Position A bei niedriger Filmtransportgeschwindigkeit zur Position A' bei höherer Filmtransportgeschwindigkeit wird eine entsprechende Änderung der Kinematik des Transportgreifers 2 bewirkt, die in Fig. 2 gestrichelt dargestellt ist. Durch diese Änderung der Kinematik wird der obere Umkehrpunkt G1 des Greifergelenks 22 nach G1' verlagert und der untere Umkehrpunkt G2 des Greifergelenks 22 nach G2' verschoben, so daß bei höheren Filmtransportgeschwindigkeiten die Umkehrpunkte G1 und G2 des Greifergelenks 22 zueinander bewegt werden.

Eine Alternative zu dieser Form der Kompensation einer Deformation der Transportgreiferspitze 21 bei höheren Filmtransportgeschwindigkeiten ist eine Veränderung der Kurbelarmlängen, so dass analog zur Darstellung gemäß Fig. 2 eine Verschiebung der oberen und unteren Umkehrpunkte G1 und G2 des Greifergelenks 22 bewirkt wird.

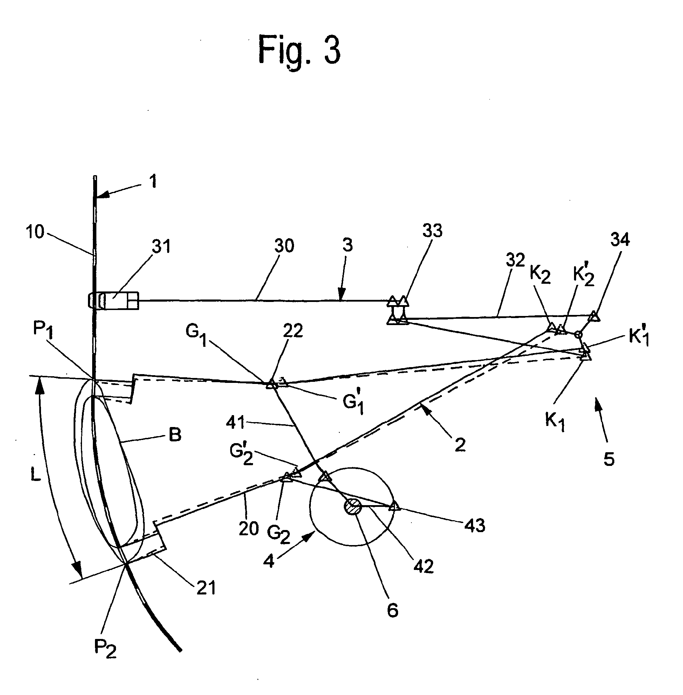

Fig. 3 zeigt eine zweite Variante, die durch die Deformation der Transportgreiferspitze 21 hervorgerufene Verlängerung der Hublänge L zu kompensieren, d. h. einer durch die Deformation der Transportgreiferspitze 21 hervorgerufenen Änderung eines Filmtransportschrittes entgegenzuwirken.

In dieser Ausführungsform wird die Kinematik des Transportgreifers 2 durch eine Verlagerung der Anlenkung 24 des der Transportgreiferspitze 21 entgegengesetzten Endes der Transportgreiferlasche 20 am Steuerelement 5 verändert, indem beispielsweise mit zunehmender Filmtransportgeschwindigkeit die Anlenkung 24 zur Steuerelementachse 50, d.h. vom Punkt K zum Punkt K' verlagert wird. Im oberen Umkehrpunkt P1 der Transportgreiferspitze 21 befindet sich die Anlenkung 24 somit am Punkt K1', während sie sich im unteren Umkehrpunkt P2 am Punkt K2' befindet.

Beide Varianten können auch miteinander kombiniert werden, d.h. eine Verlagerung des Greifergelenks 22 mit einer Verlagerung der Anlenkung 24 verknüpft werden.

Die in den Fig. 2 und 3 dargestellte Verlagerung der Antriebswelle 6 von der Position A zur Position A' sowie der Anlenkung vom Punkt K zum Punkt K' kann sowohl auf elektrischem als auch auf mechanischem Wege erfolgen.

Eine Möglichkeit der Verlagerung der Punkte A bzw. K auf mechanischem Wege besteht darin, den Schalter zur Einstellung der Filmtransportgeschwindigkeit mechanisch mit einem Schieber zu verbinden, der den Filmantrieb bei einer Veränderung der Filmtransportgeschwindigkeit verlagert, so daß die in Fig. 2 dargestellte gewünschte Veränderung der Kinematik des Transportgreifers 2 erfolgt. Dabei können empirisch ermittelte Werte berücksichtigt werden, so daß bei einer entsprechenden Steigerung der Filmtransportgeschwindigkeit die exakte Hublänge L des Transportgreifers 2 eingehalten wird.

Eine alternative Ausführungsform besteht darin, den Filmantrieb mit einem Fliehkraftregler zu verbinden, der in Abhängigkeit von der Filmtransportgeschwindigkeit eine kontinuierliche oder abgestufte Änderung der Lage des Punktes A gemäß Fig. 2 und damit eine Annäherung der Umkehrpunkte G1 und G2 des Greifergelenks 22 bzw. eine kontinuierliche oder abgestufte Änderung der Lage des Punktes K gemäß Fig. 3 und damit eine Verschiebung der Umkehrpunkte K1 und K2 der Anlenkung der Transportgreiferlasche 20 bewirkt.

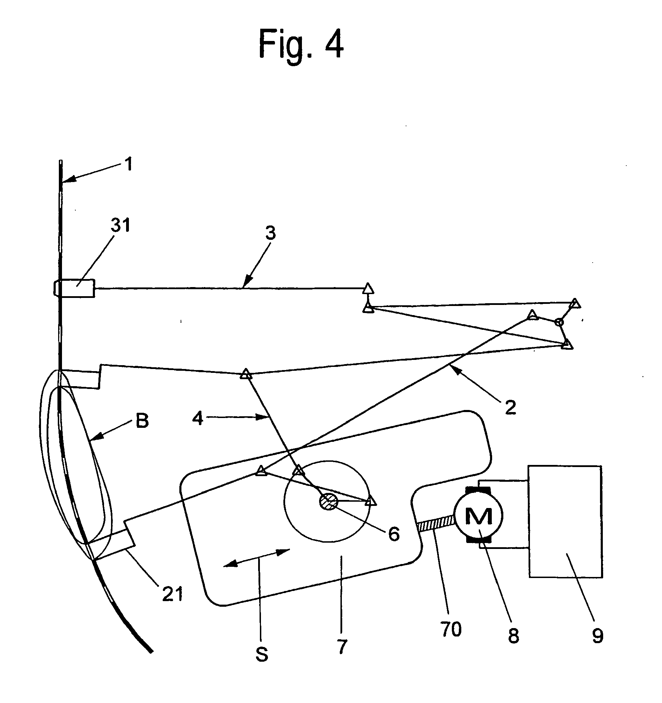

Fig. 4 zeigt schematisch eine elektrische Verschiebung der Position der Antriebswelle 6, die zusammen mit dem nicht dargestellten Filmtransportmotor auf einer Platine 7 angeordnet ist, die über ein Verstellspindel 70 mit einem Stellmotor 8 verbunden ist. Eine Betätigung des Stellmotors 8 bewirkt eine Verschiebung der Platine 7 in Richtung des Doppelpfeiles S gemäß Fig. 4, so dass die Antriebswelle 6 und damit die Mitte der Kurbel 4 in eine von der Filmtransportgeschwindigkeit abhängige Position zur Annäherung der Umkehrpunkte G1 und G2 des Greifergelenks 22 gelangt.

Zu diesem Zweck ist der Stellmotor 8 mit einer Kamerasteuerung 9 verbunden, die ein elektrisches Stellsignal an den Stellmotor 8 abgibt, das von der eingestellten Filmtransportgeschwindigkeit abhängt. Dieses Stellsignal kann stufenlos für jede gewünschte Filmtransportgeschwindigkeit von der Kamerasteuerung 9 an den Stellmotor 8 abgegeben werden. Alternativ kann eine diskontinuierliche Veränderung der Lage der Platine 7 in Abhängigkeit von fest vorgegebenen Filmtransportgeschwindigkeiten erfolgen. Möglich und mit der in Fig. 4 schematisch dargestellten Anordnung durchführbar ist auch eine kontinuierliche Veränderung der Kinematik des Transportgreifers 2 in Abhängigkeit von einer sich kontinuierlich verändernden Filmtransportgeschwindigkeit beispielsweise zur Erzeugung besonderer Bildeffekte, so daß auch in einem solchen Anwendungsfall ein exakter Bildstand sowie eine schonende Behandlung des Laufbildfilms 1 gewährleistet ist.

Alternativ oder zusätzlich kann diese Verstellung auch bezüglich der Anlenkung 24 der Transportgreiferlasche 20 am Steuerelement 5 erfolgen, indem beispielsweise die Anlenkung 24 mit einer Kurvenscheibe verbunden wird, deren Ausrichtung mittels des Stellmotors 8 beeinflusst wird.

## Patentansprüche

1. Filmschaltwerk in einer Laufbild-Filmaufnahmekamera mit mindestens einem Transportgreifer (2), der eine Transportgreiferlasche (20) und mindestens eine Transportgreiferspitze (21) aufweist, die durch die Kinematik des Transportgreifers in die Perforation eines mit eine vorgebbaren Filmtransportgeschwindigkeit zu transportierenden Laufbildfilmes (1) eintaucht, den Laufbildfilm intermittierend bewegt und eine längliche, in sich geschlossene Bahnkurve (B) durchläuft, deren Umkehrpunkte (P₁, P₂) die Hublänge (L) beim Filmtransport bestimmen,
**dadurch gekennzeichnet,**
**daß** die Kinematik des Transportgreifers (2) in Abhängigkeit von der Filmtransportgeschwindigkeit veränderbar ist.

2. Filmschaltwerk nach Anspruch 1, **dadurch gekennzeichnet, daß** die Kinematik des Transportgreifers (2) dynamisch und/oder statisch veränderbar ist.

3. Filmschaltwerk nach Anspruch 1 oder 2, **dadurch gekennzeichnet, daß** die Kinematik des Transportgreifers (2) durch eine Änderung der relativen Lage zwischen dem Transportgreifer (2) und einem gelenkig mit dem Transportgreifer (2) verbundenen Greiferantrieb (4, 6) veränderbar ist.

4. Filmschaltwerk nach Anspruch 3, **dadurch gekennzeichnet, daß** der Greiferantrieb (4, 6) aus einer mit einem Filmtransportmotor verbundenen Antriebswelle (6) und einer Kurbel (4) besteht, die die Antriebswelle (6) mit einem Greifergelenk (22) der Transportgreiferlasche (20) verbindet und daß die Position A, A') der Antriebswelle (6) in Bezug auf das Greifergelenk (22) veränderbar ist.

5. Filmschaltwerk nach Anspruch 3 oder 4, **dadurch gekennzeichnet, daß** mit steigender Filmtransportgeschwindigkeit die Umkehrpunkte (G1, G2) des die Transportgreiferlasche (20) des Transportgreifers (2) mit der Kurbel (4) verbindenden Greifergelenks (22) zueinander bewegt werden.

6. Filmschaltwerk nach mindestens einem der voranstehenden Ansprüche, **dadurch gekennzeichnet, daß** die Kinematik des Transportgreifers (2) durch eine Verlagerung der Anlenkung (24) des der Transportgreiferspitze (21) entgegengesetzten Endes der Transportgreiferlasche (20) an einem Steuerelement (5) veränderbar ist, das die Eintauchbewegung des Transportgreifers (2) und mindestens eines nach der Beendigung eines Filmtransportschrittes in die Filmperforation (10) eintauchenden Sperrgreifers (3) derart steuert, dass der Sperrgreifer (3) den Laufbildfilm (1) mit dem erneuten Eintauchen des Transportgreifers (2) in die Filmperforation (10) freigibt.

7. Filmschaltwerk nach Anspruch 6, **dadurch gekennzeichnet, dass** die Anlenkung (24) des Transportgreifers (2) am Steuerelement (5) mit zunehmender Filmtransportgeschwindigkeit zur Achse (50) des Steuerelements (5) verlagert wird.

8. Filmschaltwerk nach mindestens einem der voranstehenden Ansprüche, **dadurch gekennzeichnet, dass** die Kinematik des Transportgreifers (2) mittels eines von einer Kamerasteuerung (9) an ein elektrisch betätigbares, mit dem Greiferantrieb (4, 6), dem Transportgreifer (2) und/oder der Anlenkung (24) verbundenes Stellglied (8) abgegebenen Stellsignals veränderbar ist.

9. Filmschaltwerk nach Anspruch 8, **dadurch gekennzeichnet, daß** das Stellglied aus einem mit der Transportgreiferlasche (20) mittelbar oder unmittelbar verbundenen Stellmotor (8) besteht.

10. Filmschaltwerk nach Anspruch 8 oder 9, **dadurch gekennzeichnet, daß** die Kamerasteuerung (9) das Stellsignal in Abhängigkeit von der Filmtransportgeschwindigkeit kontinuierlich oder diskontinuierlich ändert.

11. Filmschaltwerk nach mindestens einem der voranstehenden Ansprüche 1 bis 7, **dadurch gekennzeichnet, daß** die Kinematik des Transportgreifers (2) mittels eines mit dem Greiferantrieb (4, 6), dem Transportgreifer (2) und/oder der Anlenkung (24) verbundenen mechanischen Stellgliedes veränderbar ist.

12. Filmschaltwerk nach Anspruch 11, **dadurch gekennzeichnet, daß** das mechanische Stellglied aus einem Fliehkraftregler besteht.

13. Filmschaltwerk nach mindestens einem der voranstehenden Ansprüche, **dadurch gekennzeichnet, daß** der mindestens eine Sperrgreifer (3) einen mit einer Anlenkung (34) am Steuerelement (5) verbundenen Sperrgreiferhebel (32) und eine Sperrgreiferlasche (33) aufweist, die mit der Sperrgreiferspitze (31) des Sperrgreifers (3) verbunden ist.

14. Filmschaltwerk nach mindestens einem der voranstehenden Ansprüche, **dadurch gekennzeichnet, dass** das Steuerelement (5) aus einer um eine Steuerelementachse (50) schwenkbaren Steuerelement (5) besteht, die über die zu beiden Seiten der Steuerelementachse (50) angeordneten Anlenkungen (24, 34) der Transportgreiferlasche (20) und des Sperrgreiferhebels (32) die Transportgreiferspitze (21) des Transportgreifers (2) und die Sperrgreiferspitze (31) des Sperrgreifers (3) ansteuert.

15. Filmschaltwerk nach mindestens einem der voranstehenden Ansprüche 1 bis 13, **dadurch gekennzeichnet, dass** das Steuerelement (5) aus um die Steuerelementachse (50) rotierenden Armen oder einer Scheibe mit den Anlenkungen (24, 34) der Transportgreiferlasche (20) und des Sperrgreiferhebels (32) besteht.

## Claims

1. Film feed mechanism in a film motion-picture camera having at least one feeding claw (2) which has a feeding claw link plate (20) and at least one feeding claw tip (21) which, owing to the kinematics of the feeding claw, dips into the perforation of a motion-picture film (1), which is to be fed at a prescribable film feed speed, intermittently moves the motion-picture film, and traverses an elongated inherently closed curved path (B) whose reversal points (P₁, P₂) determine the stroke length (L) during the film feed,
**characterized in that**
the kinematics of the feeding claw (2) can be varied as a function of the film feed speed.

2. Film feed mechanism according to Claim 1, **characterized in that** the kinematics of the feeding claw (2) can be varied dynamically and/or statically.

3. Film feed mechanism according to Claim 1 or 2, **characterized in that** the kinematics of the feeding claw (2) can be varied by changing the relative position between the feeding claw (2) and a claw drive (4, 6) connected in an articulated fashion to the feeding claw (2).

4. Film feed mechanism according to Claim 3, **characterized in that** the claw drive (4, 6) consists of a drive shaft (6) connected to a film feed motor, and a crank (4) which connects the drive shaft (6) to a claw joint (22) of the feeding claw link plate (20) and **in that** the position (A, A') of the drive shaft (6) can be varied with reference to the claw joint (22).

5. Film feed mechanism according to Claim 3 or 4, **characterized in that** with rising film feed speed the reversal points (G1, G2) of the claw joint (22) which connects the feeding claw link plate (20) of the feeding claw (2) to the crank (4) are moved towards one another.

6. Film feed mechanism according to at least one of the preceding claims, **characterized in that** the kinematics of the feeding claw (2) can be varied by displacing the hinging means (24) of the end, opposite the feeding claw tip (21), of the feeding claw link plate (20) on a control element (5) which controls the dipping-in movement of the feeding claw (2) and of at least one locking claw (3) dipping into the film perforation (10) after the termination of a film feed step in such a way that the locking claw (3) releases the motion-picture film (1) when the feeding claw (2) dips anew into the film perforation (10).

7. Film feed mechanism according to Claim 6, **characterized in that** the hinging means (24) of the feeding claw (2) on the control element (5) is displaced with increasing film feed speed in relation to the axis (50) of the control element (5).

8. Film feed mechanism according to at least one of the preceding claims, **characterized in that** the kinematics of the feeding claw (2) can be varied by means of an actuating signal output by a camera controller (9) to an electrically operable actuator (8) which is connected to the claw drive (4, 6), the feeding claw (2) and/or the hinging means (24).

9. Film feed mechanism according to Claim 8, **characterized in that** the actuator consists of a motor actuator (8) connected indirectly or directly to the feeding claw link plate (20).

10. Film feed mechanism according to Claim 8 or 9, **characterized in that** the camera controller (9) changes the actuating signal continuously or discontinuously as a function of the film feed speed.

11. Film feed mechanism according to at least one of the preceding Claims 1 to 7, **characterized in that** the kinematics of the feeding claw (2) can be varied by means of a mechanical actuator connected to the claw drive (4, 6), the feeding claw (2) and/or the hinging means (24).

12. Film feed mechanism according to Claim 11, **characterized in that** the mechanical actuator consists of a centrifugal governor.

13. Film feed mechanism according to at least one of the preceding claims, **characterized in that** the at least one locking claw (3) has a locking claw lever (32), connected to a hinging means (34) on the control element (5), and a locking claw link plate (33) which is connected to the locking claw tip (31) of the locking claw (3) .

14. Film feed mechanism according to at least one of the preceding claims, **characterized in that** the control element (5) consists of a control element (5) which can be pivoted about a control element axis (50) and drives the feeding claw tip (21) of the feeding claw (2) and the locking claw tip (31) of the locking claw (3) via the hinging means (24, 34), arranged on both sides of the control element axis (50), of the feeding claw link plate (20) and of the locking claw lever (32).

15. Film feed mechanism according to at least one of the preceding Claims 1 to 13, **characterized in that** the control element (5) consists of arms rotating about the control element axis (50), or of a disc having the hinging means (24, 34) of the feeding claw link plate (20) and of the locking claw lever (32).

## Revendications

1. Mécanisme d'entraînement de film dans une caméra d'enregistrement cinématographique comprenant au moins une griffe de transport (2), qui présente une éclisse de griffe de transport (20) et au moins une pointe de griffe de transport (21), laquelle pénètre par la cinématique de la griffe de transport dans la perforation d'un film cinématographique (1) à transporter à une vitesse de transport de film pouvant être prédéfinie, déplace le film cinématographique de manière intermittente et parcourt une trajectoire (B) longitudinale fermée sur elle-même dont les points de retournement (P₁, P₂) déterminent la longueur d'excursion (L) lors du transport du film, **caractérisé en ce que** la cinématique de la griffe de transport (2) peut être modifiée en fonction de la vitesse de transport du film.

2. Mécanisme d'entraînement de film selon la revendication 1, **caractérisé en ce que** la cinématique de la griffe de transport (2) peut être modifiée de manière dynamique et/ou statique.

3. Mécanisme d'entraînement de film selon la revendication 1 ou 2, **caractérisé en ce que** la cinématique de la griffe de transport (2) peut être modifiée en changeant la position relative entre la griffe de transport (2) et un mécanisme d'entraînement de griffe (4, 6) relié de manière articulée à la griffe de transport (2).

4. Mécanisme d'entraînement de film selon la revendication 3, **caractérisé en ce que** le mécanisme d'entraînement de griffe (4, 6) se compose d'un arbre d'entraînement (6) relié à un moteur de transport de film et d'une manivelle (4) qui relie l'arbre d'entraînement (6) à une articulation de griffe (22) de l'éclisse de griffe de transport (20) et que la position (A, A') de l'arbre d'entraînement (6) par rapport à l'articulation de griffe (22) peut être modifiée.

5. Mécanisme d'entraînement de film selon la revendication 3 ou 4, **caractérisé en ce que** lorsque la vitesse de transport du film augmente, les points de retournement (G1, G2) de l'articulation de griffe (22) qui relie l'éclisse de griffe de transport (20) de la griffe de transport (2) à la manivelle (4) sont déplacés l'un par rapport à l'autre.

6. Mécanisme d'entraînement de film selon au moins l'une des revendications précédentes, **caractérisé en ce que** la cinématique de la griffe de transport (2) peut être modifiée en déplaçant le point d'articulation (24) de l'extrémité de l'éclisse de griffe de transport (20) opposée à la pointe de la griffe de transport (21) à un élément de commande (5) qui commande le mouvement de pénétration de la griffe de transport (2) et d'au moins une griffe de blocage (3) qui pénètre dans la perforation du film (10) après la fin d'une étape de transport du film de telle sorte que la griffe de blocage (3) libère le film cinématographique (1) avec la nouvelle pénétration de la griffe de transport (2) dans la perforation du film (10).

7. Mécanisme d'entraînement de film selon la revendication 6, **caractérisé en ce que** le point d'articulation (24) de la griffe de transport (2) à l'élément de commande (5) est déplacé en direction de l'axe (50) de l'élément de commande (5) à mesure que la vitesse de transport du film augmente.

8. Mécanisme d'entraînement de film selon au moins l'une des revendications précédentes, **caractérisé en ce que** la cinématique de la griffe de transport (2) peut être modifiée au moyen d'un signal de commande délivré par une commande de caméra (9) à un élément de commande (8) actionnable électriquement et relié au mécanisme d'entraînement de griffe (4, 6), à la griffe de transport (2) et/ou au point d'articulation (24).

9. Mécanisme d'entraînement de film selon la revendication 8, **caractérisé en ce que** l'élément de commande se compose d'un servomoteur (8) relié directement ou indirectement à l'éclisse de griffe de transport (20).

10. Mécanisme d'entraînement de film selon la revendication 8 ou 9, **caractérisé en ce que** la commande de caméra (9) modifie le signal de commande de manière continue ou discontinue en fonction de la vitesse de transport du film.

11. Mécanisme d'entraînement de film selon au moins l'une des revendications 1 à 7, **caractérisé en ce que** la cinématique de la griffe de transport (2) peut être modifiée au moyen d'un élément de commande mécanique relié au mécanisme d'entraînement de griffe (4, 6), à la griffe de transport (2) et/ou au point d'articulation (24).

12. Mécanisme d'entraînement de film selon la revendication 11, **caractérisé en ce que** l'élément de commande mécanique se compose d'un élément de réglage de la force centrifuge.

13. Mécanisme d'entraînement de film selon au moins l'une des revendications précédentes, **caractérisé en ce que** l'au moins une griffe de blocage (3) présente un levier de griffe de blocage (32) relié au point d'articulation (34) sur l'élément de commande (5) et une éclisse de griffe de blocage (33) qui est reliée à la pointe de griffe de blocage (31) de la griffe de blocage (3).

14. Mécanisme d'entraînement de film selon au moins l'une des revendications précédentes, **caractérisé en ce que** l'élément de commande (5) se compose d'un élément de commande (5) pivotant autour d'un axe d'élément de commande (50), lequel commande la pointe de griffe de transport (21) de la griffe de transport (2) et la pointe de griffe de blocage (31) de la griffe de blocage (3) par le biais des points d'articulation (24, 34) disposés des deux côtés de l'axe d'élément de commande (50) de l'éclisse de griffe de transport (20) et du levier de griffe de blocage (32).

15. Mécanisme d'entraînement de film selon au moins l'une des revendications précédentes 1 à 13, **caractérisé en ce que** l'élément de commande (5) se compose de bras tournant autour de l'axe d'élément de commande (50) ou d'un disque avec les points d'articulation (24, 34) de l'éclisse de griffe de transport (20) et du levier de griffe de blocage (32).
